# EUROPÄISCHE PATENTSCHRIFT

(11) **EP 3 630 706 B1**
(45) Veröffentlichungstag und Bekanntmachung des Hinweises auf die Patenterteilung: **04.08.2021**
(21) Anmeldenummer: 18726157.3
(22) Anmeldetag: 23.05.2018
(51) Int. Cl.: C05D 9/00, C05G 1/00, C05F 11/02

(54) **DAUERHUMUS-WASSERSPEICHERHYBRID**
LONG-TERM HUMUS WATER STORAGE HYBRID
RÉSERVOIR D'EAU HYBRIDE POUR HUMUS STABLE

(30) Priorität: 24.05.2017 EP 17172661
(43) Veröffentlichungstag der Anmeldung: 08.04.2020
(73) Patentinhaber: Novihum Technologies GmbH, 44147 Dortmund (DE)
(72) Erfinder: NINNEMANN, Horst, 58730 Fröndenberg/Ruhr (DE); SCHLIPF, Michael, 73035 Göppingen (DE); MOREIRA, André, 58452 Witten (DE); LANGER, Peter, 49025 Hasbergen (DE); SORGE, Reinhard, 06809 Roitzsch (DE)
(74) Vertreter: Lederer & Keller Patentanwälte Partnerschaft mbB
(86) Internationale Anmeldenummer: PCT/EP2018/063443
(87) Internationale Veröffentlichungsnummer: WO 2018/215508

(56) Entgegenhaltungen:
- EP-A1- 0 561 508
- WO-A2-2016/116099
- DE-A1- 19 825 168
- DE-A1- 19 859 068
- DE-A1-102010 005 363
- DE-C- 870 565
- DE-C1- 10 120 433
- US-A- 3 630 710
- US-A1- 2014 069 001
- JANSSEN B H: "Nitrogen mineralization in relation to C:N ratio and decomposability of organic materials", PLANT AND SOIL, Bd. 181, 1996, Seiten 39-45, XP002783414, & 8TH NITROGEN WORKSHOP; GHENT, BELGIUM; SEPTEMBER 5-8, 1994

## Beschreibung

Die vorliegende Erfindung betrifft ein Dauerhumus-Wasserspeicherhybrid, umfassend ein organisches Düngemittel aus oxidierend und ammonisierend behandelter Braunkohle und mindestens eine wasserspeichernde Komponente, ausgewählt aus Materialien mineralischen oder organischen Ursprungs. Das Dauerhumus-Wasserspeicherhybrid ist insbesondere geeignet und vorgesehen als Zusatzstoff für Pflanzensubstrate.

Dauerhumus ist als mikrobiell schwer umsetzbare organische Substanz zu verstehen die nur langsam abgebaut wird. Im Bodengefüge macht Dauerhumus für gewöhnlich einen großen Teil der organischen Bodensubstanz aus (Schinner F, Sonnleitner R.: "Bodenökologie: Mikrobiologie und Bodenenzymatik Band I: Grundlagen, Klima, Vegetation und Bodentyp", Springer-Verlag, 1996, Seite 37, 2.3.5). Dauerhumus besteht zu einem Großteil aus Huminstoffen, d.h. mikrobiell schwer umsetzbare, humifizierte organische Substanzen; der Dauerhumus hat somit Huminstoffcharakter. Zu den Huminstoffen gehören die Fulvosäuren, die Hymatomelansäuren, die Huminsäuren und die Humine (Fiedler, H.J. und Reissig, H.: "Lehrbuch der Bodenkunde", Gustav Fischer Verlag Jena, 1964, S. 174 Pkt. 4.423)

Bei defizitärer Wasserversorgung auf Standorten mit weniger bindigen oder nichtbindigen Böden, d.h. Böden mit relativ niedrigem Ton-/Schluffanteil (Ton: Partikel < 2 µm, Schluff: 50% der Partikel zwischen 0,002 bis 0,063 mm) bzw. relativ hohem Sandanteil (Sand: Definiert als Korn zwischen 0,063 bis 2 Millimeter Durchmesser), können für das Pflanzenwachstum von Kulturpflanzen Probleme auftreten, die sich in Form verminderter Wuchsleistung, Ertrag und bis hin zum Absterben der Pflanzungen zeigen. Im gewerblichen Agrar- und Gartenbau sind insbesondere bei Kulturpflanzen in diesen Fällen technische Aufwendungen und Maßnahmen notwendig, welche die Defizite der Wasserversorgung teilweise oder vollständig ausgleichen. Zu diesen Aufwendungen und Maßnahmen zählen unter anderem der Einsatz von Bewässerungssystemen, die die Gefahr der Über- oder Unterwässerung mit sich bringen, oder indirekte Maßnahmen, wie beispielsweise aufwendige Beschattungssysteme, die entweder den Lichteinfall permanent reduzieren oder gesteuert werden müssen, um einen genügenden Ertrag zu gewährleisten.

Eine nachhaltige und langfristige Möglichkeit zur Verbesserung der Wasserhaushaltssituation von Pflanzen auf Standorten mit weniger bindigen oder nichtbindigen Böden ist die Anhebung des Bodenanteils an bindigen Materialien, d.h, ton- und schluffhaltiger Materialien oder strukturverbessernden organischen Substanzen, wie Stallmist, Komposte und dergleichen. Hierzu müssen jedoch große Mengen solcher Ton- und Schluffmaterialien oder organischer Substanzen dem Boden oder den verwendeten Substraten zugemischt werden. Die natürliche Verfügbarkeit dieser bindigen Materialien, insbesondere der organischen Substanzen ist teilweise beschränkt, und deren Einsatz deshalb in den benötigten Mengen mit erheblichen Kosten verbunden.

Es gibt eine Reihe von Vorschlägen, Produkte technisch herzustellen, die dem Dauerhumus äquivalente Eigenschaften aufweisen.

Beispielweise offenbart die DE 101 20 433 ein Verfahren, bei dem jungtertiäre Weichbraunkohle und Ton und/oder Lehm in einem bestimmten Masseverhältnis durch eine gemeinsame, sehr intensive und länger einwirkende Nassauschlussmahlung in der erforderlichen makromolekularen Verteilung verbunden werden. Das Wasser fungiert dabei durch seine partielle Löse- und seine Quellwirkung als Dispergiermittel und zugleich als Reaktionsvermittler.

Die DE 198 25 168 schlägt vor, Rohbraunkohle mit verschiedenen organischen Düngemitteln wie Kompost, Guano oder auch mineralischen NPK-Düngern zu mischen.

Die DE 10 2010 005 363 offenbart ein partikelförmiges Kohlenstoff-basiertes Speichermaterial, das Wasser-, Nährstoff- und Mikroorganismen absorbieren kann, bei dem eine anorganische Kohlenstoffkomponente durch thermische Behandlung von Kohle und/oder von natürlichen und/oder künstlich hergestellten organischen Verbindungen unter Sauerstoffausschluss bei hohen Temperaturen erzeugt wurde.

Die US 2014/0069001 offenbart eine Zusammensetzung in Pelletform, die beispielsweise ein Samenkorn, Kokosfasern, Maismehl, Aktivkohle und ein absorbierendes Polymer enthält. Die Zusammensetzung kann ebenfalls beispielsweise Ton oder Bentonit enthalten.

Die EP 0 561 508 offenbart ein Düngemittel auf der Basis von Leonardit, bei dessen Herstellung Leonarditerz gemahlen wird und die gemahlen Leonarditerzteilchen mit einer wässrigen Ammoniaklösung behandelt werden.

Die DE 0 870 565 offenbart ein Verfahren zur Herstellung von stickstoffreichen Humusdüngemitteln durch Behandlung jüngerer fossiler Brennstoffe mit Luft, Ammoniak und/oder anderen ammoniakhaltigen Gasen bei erhöhter Temperatur und erhöhtem Druck, bei dem Brennstoffe mit einem sehr geringen Wassergehalt von unter 30% behandelt werden.

Die US 3,630,710 offenbart ein Düngemittel mit einem stickstoffangereicherten teilweise oxidierten organischen Material. Das teilweise oxidierte organische Material kann entweder Kohle oder auch Gras, Seetang, etc. sein.

Die WO 2016/116099 beschreibt Bodenhilfsstoffe, die das Wasserhaltevermögen bei gleichzeitiger Anregung der biologischen Aktivität für den Aufbau eines funktionsfähigen Bodens erhöhen sollen. Es soll ein einfaches Produkt zur Anwendung als wässrige Lösung oder als im Wesentlichen festes Produkt zur Verbesserung des Boden-Pflanze-Wasserhaushalts hergestellt werden. Das Produkt der WO 2016/116099 wird über ein Verfahren hergestellt, bei dem ein Braunkohlebestandteil und/oder eine geologische Braunkohlevorstufe mit einer Säure aufgeschlossen, die Säure später mit einer Lauge abgepuffert, das so erhaltene Zwischenprodukt abfiltriert und mit Fulvosäuren in einem Gewichtsanteil von wenigstens 1% am fertigen Produkt versetzt wird. Dem so erhaltenen Gemisch kann noch beispielsweise Bentonit zugesetzt werden.

Keine der vorstehend genannten Druckschriften beschreibt ein organisches Düngemittel aus oxidierend und ammonisierend behandelter Braunkohle, wie es in den erfindungsgemäßen Dauerhumus-Wasserspeicherhybridprodukten eingesetzt wird. Derartige Produkte und ein Verfahren zu ihrer Herstellung werden in der EP 1 144 342 (entsprechend der WO 00/37394) zur Verfügung gestellt, ein verbessertes Verfahren zu ihrer Herstellung wird später in der WO 2017/186852 beschrieben. Die dort beschriebenen Produkte zeichnen sich durch ein Kohlenstoff-Stickstoffverhältnis von 7 bis 15, bzw. 9 bis 15 aus, wobei wesentlich ist, dass der Stickstoff gemessen am Gesamtstickstoff chemisch unterschiedlich gebunden vorliegt, nämlich 20 bis 45% des Stickstoffs liegen als Ammoniumstickstoff vor und 55 bis 80% des Stickstoffs als organisch gebundener Stickstoff.

Dabei sind bis zu 20% des Gesamtstickstoffs als Amid vorhanden, und bis zu 60% des Gesamtstickstoffs sind fest organisch gebunden, das heißt sie sind nicht als Amid hydrolysierbar.

Mit steigender Weltbevölkerung und weltweit abnehmender Menge an kultivierbaren Böden wird die Ernährung der Bevölkerung in vielen Gegenden zunehmend problematisch. Eine Verbesserung von Böden, die ansonsten nur schlecht (mit geringem Ertrag) oder gar nicht zur Erzeugung von Nutzpflanzen (aber auch Zierpflanzen) geeignet sind, könnte dieses Problem lindern. Es besteht daher trotz der vielfältigen Versuche im Stand der Technik, vorteilhafte Bodenverbesserungsmittel und Düngemittel zur Verfügung zu stellen, weiterhin ein Bedarf nach einem verbesserten Produkt, das in verschiedenster Art und Weise Böden und Pflanzen zugeführt werden kann und das zu einem längerfristig höheren Pflanzenwachstum und Ertrag führt, als dies mit den bekannten Produkten möglich ist.

Aufgabe der vorliegenden Erfindung besteht somit in der Bereitstellung eines derartigen Produktes. Das Produkt soll bei Verwendung als Pflanzensubstrat bzw, als Zusatzstoff für Pflanzensubstrate und Substratzusatzstoff für Böden zu einer signifikanten Verbesserung der Ertragssteigerung auch auf ansonsten "schlechten" Böden führen und darüber hinaus kostengünstig und in großem Maßstab herstellbar sein.

Gelöst wird diese Aufgabe erfindungsgemäß durch ein Dauerhumus-Wasserspeicherhybrid umfassend ein organisches Düngemittel aus oxidierend und ammonisierend behandelter Braunkohle und mindestens eine wasserspeichernde Komponente ausgewählt aus Materialien mineralischen oder organischen Ursprungs, wobei der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, ausmacht. Das organische Düngemittel aus oxidierend und ammonisierend behandelter Braunkohle ist beispielweise erhältlich nach einem Verfahren, wie es in der WO 00/37394 bzw. der WO 2017/186852 beschrieben ist und damit insbesondere nach einem Verfahren, dass die folgenden Verfahrensschritte umfasst:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100°C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch ein organisches Düngemittel gewonnen wird.

Derartig hergestellte organische Düngemittel aus oxidierend und ammonisierend behandelter Braunkohle haben ein C/N-Verhältnis von 7 bis 15, und gemessen am Gesamtstickstoff ist der Stickstoff chemisch unterschiedlich gebunden, wobei
- 20 - 45% als Ammonium-Stickstoff vorliegen
- 55 - 80% organisch gebunden sind und
- bis zu 20% des Gesamtstickstoffs als Amid und
- bis zu 60% nicht als Amid hydrolysierbar organisch gebunden sind

Verfahren zur Bestimmung des Anteils des Stickstoffs, der als Ammonium-Stickstoff vorliegt und des Stickstoffs, der organisch gebunden vorliegt, sowie des Anteils des Gesamtstickstoffs, der als Amid vorliegt und des Anteils, der nicht als Amid hydrolysierbar organisch gebunden ist, sind dem Fachmann ohne weiteres bekannt. Ein geeignetes Verfahren ist unter anderem in der WO 00/37394 (= EP 1 144 342) beschrieben, auf die in diesem Zusammenhang ausdrücklich Bezug genommen wird. So ist der in Ammoniumform gebundene Stickstoff mit in Wasser suspendiertem Magnesiumoxid leicht als Ammoniak abzuspalten, während die organischen Bindungsformen schwerer hydrolysierbar sind. Der Anteil des Gesamtstickstoffs, der in Amidform vorliegt, ist auf normale Weise mit verdünnter Natronlauge unter den Bedingungen der Wasserdampfdestillation hydrolysierbar. Der unter diesen experimentellen Bedingungen nicht hydrolysierbare Anteil des organisch gebundenen Stickstoffs ist der nicht als Amid hydrolysierbar organisch gebundene Anteil des Gesamtstickstoffs.

Neben den vorstehend genannten und bekannten Verfahren können aber auch beliebige andere Verfahren, die dem Fachmann aufgrund seines allgemeinen Fachwissens geläufig sind, verwendet werden.

In dem erfindungsgemäßen Dauerhumus-Wasserspeicherhybrid sind die Materialien mineralischen Ursprungs, ausgewählt aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten, und die Materialien organischen Ursprungs sind ausgewählt aus Komposten, gerotteten Wirtschaftsdüngern, kohleartigen Produkten, Lignocellulosematerial, Holzfasern, Holzwolle, Kokosfasern, Hanffasern und Flachsfasern.

Das erfindungsgemäße Dauerhumus-Wasserspeicherhybrid führt zu einer signifikanten Steigerung des Pflanzenwachstums und somit des Ertrages, insbesondere bei Böden die ansonsten allenfalls mit geringem Ertrag bewirtschaftet werden könnten.

Dauerhumus ist entsprechend der oben gegebenen Definition eine mikrobiell schwer umsetzbare organische Substanz mit Huminstoffcharakter. Unter Wasserspeicher sind poröse mineralische, insbesondere tonmineralische, und organische Substanzen zu verstehen. Unter Hybrid ist erfindungsgemäß die Kombination aus dem organischen Düngemittel und der mindestens einen wasserspeichernden Komponente zu verstehen.

Als einen ersten Bestandteil enthält das Dauerhumus-Wasserspeicherhybrid ein organisches Düngemittel aus oxidierend und ammonisierend behandelter Braunkohle. Aufgrund ihrer chemischen Eigenschaften und ihrer Verfügbarkeit hat Braunkohle schon seit längerer Zeit Interesse als Ausgangsmaterial für die Herstellung von Stoffen bzw. Stoffgemischen mit Düngewirkung gefunden. Bei der oxidierenden und ammonisierenden Behandlung von Braunkohle handelt es sich um eine "oxidative Ammonolyse". Die oxidative Ammonolyse wurde von Flaig, et. al. (1959) beispielsweise in "Umwandlung von Lignin in Huminsäuren bei der Verrottung von Weizenstroh" Chem.Ber.,92 8, 1973-1982 beschrieben.

Verfahren zur Herstellung von organischem Düngemittel aus oxidierend und ammonisierend behandelter Braunkohle werden beispielsweise in der EP 1 144 342 A1 und in der internationalen Patentanmeldung WO 2017/186852 (Anmeldenummer PCT/EP2017/060060) offenbart. Das organische Düngemittel des Dauerhumus-Wasserspeicherhybrids der vorliegenden Erfindung hat Huminstoffcharakter. In Analogie zum Huminstoffcharakter des Dauerhumus (siehe oben), bedeutet Huminstoffcharakter in Bezug auf das organische Düngemittel des Dauerhumus-Wasserspeicherhybrids der vorliegenden Erfindung, dass das organische Düngemittel zu einem Großteil aus Huminstoffen besteht. Zu den Huminstoffen gehören die Fulvosäuren, die Hymatomelansäuren, die Huminsäuren und die Humine (Fiedler, H.J. und Reissig, H.: "Lehrbuch der Bodenkunde", Gustav Fischer Verlag Jena, 1964, S. 174 Pkt. 4.423). Zu einem Großteil in Bezug auf den Huminstoffanteil bedeutet vorliegend, dass die Huminstoffe den größten Gewichtsanteil des organischen Düngemittels des Dauerhumus-Wasserspeicherhybrids der vorliegenden Erfindung im getrockneten Zustand ausmachen. Beispielsweise ist darunter zu verstehen, dass die Huminstoffe > 50 Gew.-%, vorzugsweise > 60 Gew.-%, noch bevorzugter > 70 Gew.-%., und insbesondere bevorzugt > 80 Gew.-%, des organischen Düngemittels des Dauerhumus-Wasserspeicherhybrids der vorliegenden Erfindung im getrockneten Zustand ausmachen.

Die Abkürzungen "Gew.-%" und "Vol.-%", wie hierein verwendet, stehen für "Gewichtsprozent" bzw. "Volumenprozent" und bezeichnen das Volumen bzw. das Gewicht eines Anteils bezogen auf ein Gesamtgewicht bzw. ein Gesamtvolumen. Um welchen Anteil es sich handelt, und auf welches Gesamtgewicht oder Gesamtvolumen dieser bezogen ist, wird im Rahmen der vorliegenden Beschreibung der Erfindung an entsprechender Stelle jeweils angegeben.

Die Anwendung des organischen Düngemittels aus oxidierend und ammonisierend behandelter Braunkohle allein verbessert das Wasserausnutzungsvermögen von Pflanzen. Es hat sich jedoch gezeigt, dass dies für viele Einsatzzwecke nicht ausreichend ist, insbesondere, wenn eine längerfristige Versorgung der Pflanzen bei fehlender Wasserversorgung notwendig ist. Überraschenderweise hat sich nun gezeigt, dass die Kombination des organischen Düngemittels mit mindestens einer wasserspeichernden Komponente, wenn sie Böden und Substraten zugeführt wird, die Wasserhaushaltssituation synergistisch verbessert und zu einer höheren Ertragssteigerung führt als das organische Düngemittel und die mindestens eine wasserspeichernde Komponente alleine. Böden sind vorliegend als Abschnitte des obersten, belebten Teils der Erdkruste des Festlandes zu verstehen. Unter Substraten sind vorliegend Nährböden aller Art zu verstehen, einschließlich des gewachsenen Erdbodens, der durch seinen jeweiligen Bodentyp gekennzeichnet wird (Bernhard Berg: Grundwissen des Gärtners. Ulmer, Stuttgart 1976, S. 198-206). Substrate sind ferner Stoffe, die in Gefäßen (z.B. Blumentöpfen) und bodenunabhängigen Anwendungen (z.B. Dachbegrünung) ein- oder in Böden (z.B. in Pflanzlöchern) aufgebracht werden. Dort dienen sie den Pflanzen als Wurzelraum (Verband der Humus- und Erdenwirtschaft).

Die Dauerhumus-Wasserspeicherhybride der vorliegenden Erfindung sind gegenüber den bekannten Produkten verbessert. So haben sie gegenüber den Bodenverbesserungsmitteln der WO 2016/116099 einen deutlich höheren Huminsäuregehalt, und der Stickstoff ist ein struktureller Bestandteil der Huminstofffraktion. Es hat sich gezeigt, dass dies große Bedeutung für die biologische Verwertbarkeit des Stickstoffs hat.

Die erfindungsgemäßen Dauerhumus-Wasserspeicherhybridprodukte haben daher gegenüber den bekannten Produkten eine zeitlich differenziert wirksame Stickstofffreisetzung, was zu einer Stickstofflangzeitwirkung führt. Dies führt zu einem deutlich höheren Ertrag der Pflanzen bei gleicher oder besserer Qualität der Frucht, der über einen längeren Zeitraum erzielt wird, verglichen mit den Produkten des Standes der Technik.

Unter wasserspeichernden Komponenten sind erfindungsgemäß Stoffe, insbesondere poröser Natur, zu verstehen die die Wasserkapazität von Böden und Substraten erhöhen. Wasserspeichernde Komponenten aus Materialien mineralischen Ursprungs, im Sinne der vorliegenden Erfindung, sind poröse mineralische Substanzen, insbesondere tonmineralische Substanzen (Schichtminerale). Wasserspeichernde Komponenten aus Materialien organischen Ursprungs, im Sinne der vorliegenden Erfindung, sind poröse organische Substanzen, wie Komposte, gerottete Wirtschaftsdünger oder Holzkohle und deren Derivate.

Im erfindungsgemäßen Dauerhumus-Wasserspeicherhybrid macht der Anteil an dem organischen Düngemittel 0,5-99,9 Vol.-%, vorzugsweise 1,0-95,0 Vol.-%, noch bevorzugter 1,0-90,0 Vol.-%, und der Anteil an der mindestens einen wasserspeichernden Komponente 0,1-99,5 Vol.-%, vorzugsweise 5,0-99,0 Vol.-%, noch bevorzugter 10,0-99,0 Vol.-%, jeweils bezogen auf das Gesamtvolumen des Dauerhumus-Wasserspeicherhybrids, aus.

Das organische Düngemittel in Kombination mit der wasserspeichernden Komponente ermöglicht den Pflanzen den effizienteren Umgang mit den Wasserreserven im Substrat. Der Einsatz des Dauerhumus-Wasserspeicherhybrids der vorliegenden Erfindung zeigt seine Wirkung in einem Anstieg des Wasserausnutzungsgrades, d.h. Pflanzen können unter Einsatz des Dauerhumus-Wasserspeicherhybrids bei defizitärer Wasserversorgung mehr Ertrag generieren als ohne Dauerhumus-Wasserspeicherhybrid. Zusätzlich wird die Wasserkapazität des Substrats bzw. des Bodens erhöht.

Gemäß der vorliegenden Erfindung sind die Materialien mineralischen Ursprungs auszuwählen aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten. In einer besonders bevorzugten Ausführungsform der vorliegenden Erfindung sind die Materialien mineralischen Ursprungs auszuwählen aus Bentonit, Montmorillonit, Ton, gebranntem Ton, Blähton und Blähschiefer. Insbesondere bevorzugt als Material mineralischen Ursprungs ist ein Schichtsilikat wie Bentonit.

Bentonit der hier verwendet wird, enthält > 50 Gew.-%, bevorzugt 60-80 Gew.-%, Montmorillonit und damit eine sehr gute Quellfähigkeit, die auf der hohen inneren Oberfläche des Schichtsilikates von 400 - 600 m²/g beruht. Bevorzugt wird die natürlich vorkommende, gemahlene Form von Bentonit verwendet, beispielsweise aus den Landshuter Abbaugebieten, die z.B. von S&B Industrial Minerals GmbH oder Clariant vertrieben werden.

Gemäß der vorliegenden Erfindung sind die wasserspeichernden Komponenten aus Materialien organischen Ursprungs auszuwählen aus Komposten, gerotteten Wirtschaftsdüngern, kohleartigen Produkten, Lignocellulosematerial, Holzfasern, Holzwolle, Kokosfasern, Hanffasern und Flachsfasern. In einer weiteren bevorzugten Ausführungsform der vorliegenden Erfindung sind die Materialien organischen Ursprungs Komposte, gerottete Wirtschaftsdünger und Holzkohle und deren Derivate. Insbesondere bevorzugt sind Komposte.

Kompost ist eine humus- und nährstoffreiche Substanz, die als Endprodukt bei der Kompostierung von organischen Abfällen entsteht und stets eine feste Konsistenz aufweist. Im Gegensatz zur Vergärung finden die biologischen Prozesse bei der Kompostierung unter Einwirkung von Luftsauerstoff statt. In diesem Zusammenhang wird auch von aerober Behandlung bzw. Zersetzung gesprochen (Verband der Humus- und Erdenwirtschaft e.V.: www.vhe.de). Zu den gerotteten Wirtschaftsdüngern im Sinne der vorliegenden Erfindung zählen insbesondere gerotteter Mist und Dung (beispielsweise Rindermist/-dung, Schafmist/-dung, Pferdemist/-dung, etc.), gerottete Futterreste und gerotteter Rindenmulch. Mist ist dabei als die in der Landwirtschaft bei der Viehhaltung anfallende Mischung aus Exkrementen von Tieren und einem Bindemedium wie Stroh, Hobelspäne oder Hanfhäcksel zu verstehen. Dung ist in der Landwirtschaft bei der Viehhaltung anfallendes Exkrement mit Feststoffanteil. Der Begriff "gerottet" in Bezug auf Wirtschaftsdünger bedeutet die wenigstens teilweise Zersetzung und Umwandlung unter aeroben, teilaeroben, teilanaeroben oder weitgehend anaeroben Bedingungen. Kohleartige Produkte umfassen insbesondere Holzkohle und deren Derivate (Schilling. G., 2000, Pflanzenernährung und Düngung, Ulmer Stuttgart).

in einer alternativen Ausführungsform des erfindungsgemäßen Dauerhumus-Wasserspeicherhybrids macht der Anteil an organischem Düngemittel beispielsweise 0,5-60,0 Vol.-%, vorzugsweise 0,5-40,0 Vol.-%, bevorzugter 0,5-20,0 Vol.-%, noch bevorzugter 1,0-10,0 Vol.-%, insbesondere bevorzugt 1,0-5,0 Vol.-%, und der Anteil an der mindestens einen wasserspeichernden Komponente beispielsweise 40,0-99,5 Vol.-%, vorzugsweise 60,0-99,5 Vol.-%, bevorzugter 80,0-99,5 Vol.-%, noch bevorzugter 90,0-99,0 Vol.-%, insbesondere bevorzugt 95,0-99,0 Vol.-%, jeweils bezogen auf das Gesamtvolumen des Dauerhumus-Wasserspeicherhybrids, aus.

In einer weiteren alternativen Ausführungsform des erfindungsgemäßen Dauerhumus-Wasserspeicherhybrids macht der Anteil an organischem Düngemittel 1,0-99,0 Vol.-%, vorzugsweise 5,0-99,0 Vol.-%, bevorzugter 20,0-99,0 Vol.-%, noch bevorzugter 30,0-95,0 Vol.-%, 50,0-95,0 Vol.-%, 60,0-95,0 Vol.-% oder 70,0-90,0 Vol.-%, insbesondere bevorzugt ungefähr 90,0 Vol.-%, und der Anteil an der mindestens einen wasserspeichernden Komponente 1,0-99,0 Vol.-%, vorzugsweise 1,0-95,0 Vol.-%, bevorzugter 1,0-80,0 Vol.-%, noch bevorzugter 5,0-70,0 Vol.-%, 5,0-50,0 Vol.-%, 5,0-40,0 Vol.-% oder 10,0-30,0 Vol.-%, insbesondere bevorzugt ungefähr 10,0 Vol.-%, jeweils bezogen auf das Gesamtvolumen des Dauerhumus-Wasserspeicherhybrids, aus.

In noch einer weiteren alternativen Ausführungsform des erfindungsgemäßen Dauerhumus-Wasserspeicherhybrids macht der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, jeweils bezogen auf das Gesamtvolumen des Dauerhumus-Wasserspeicherhybrids, aus.

Gemäß der vorliegenden Erfindung weist das organische Düngemittel aus oxidierend und ammonisierend behandelter Braunkohle des Dauerhumus-Wasserspeicherhybrids ein C/N-Verhältnis von 7 bis 15, bevorzugt 8 bis 15, stärker bevorzugt 9 bis 15 und einen Stickstoffgehalt von bis zu 8 Gew.-%, bezogen auf das Trockengewicht des Düngemittels, auf. Vorzugsweise beträgt der Stickstoffgehalt des organischen Düngemittels mindestens 4 Gew.-%, stärker bevorzugt mindestens 5 Gew.-% und insbesondere bevorzugt mindestens 6 Gew.-%, jeweils bezogen auf das Trockengewicht des Düngemittels.

Der Stickstoff liegt in dem organischen Düngemittel in verschiedenartigen chemischen Bindungsformen vor. Ein Teil des Stickstoffs liegt in der Ammoniumform gebunden vor, welche kurzfristig pflanzenverfügbar ist. Ein weiterer Teil liegt gebunden in fest organisch gebundenen Bindungsformen vor, welche eine langfristige Pflanzenverfügbarkeit aufweisen. Ein weiterer Teil liegt in der Amidform vor, welche mittelfristig pflanzenverfügbar ist.

Die chemischen Bindungsformen unterscheiden sich hinsichtlich ihrer Hydrolysierbarkeit. Der in der Ammoniumform gebundene Stickstoff ist mit in Wasser suspendiertem MgO leicht als Ammoniak abzuspalten, während die organischen Bindungsformen schwerer hydrolysierbar sind. Der Teil, der in der Amidform vorliegt, kann auf normale Weise mit verdünnter Natronlauge unter den Bedingungen der Wasserdampfdestillation hydrolysiert werden. Der unter diesen experimentellen Bedingungen nicht hydrolysierbare Anteil stellt den festen, organisch gebundenen Stickstoff dar.

Gemäß der vorliegenden Erfindung weist das organische Düngemittel ein C/N-Verhältnis von 7 bis 15 auf und gemessen am Gesamtstickstoff liegt der Stickstoff chemisch unterschiedlich gebunden vor, wovon 20 - 45% als Ammonium-Stickstoff vorliegen, 55 - 80% organisch gebunden sind, wovon bis zu 20% des Gesamtstickstoffs als Amid und bis zu 60% nicht als Amid hydrolysierbar organisch gebunden sind.

Das Herstellungsverfahren des organischen Düngemittels aus oxidierend und ammonisierend behandelter Braunkohle des erfindungsgemäßen Dauerhumus-Wasserspeicherhybrids ist nicht weiter beschränkt. In einer Ausführungsform der vorliegenden Erfindung ist das organische Düngemittel aus oxidierend und ammonisierend behandelter Braunkohle des erfindungsgemäßen Dauerhumus-Wasserspeicherhybrids erhältlich nach einem Verfahren umfassend die folgenden Schritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100°C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt ohne Zufuhr des sauerstoffhaltigen Oxidationsmittels und abschließendes Abkühlen, wodurch das organische Düngemittel gewonnen wird.

Die wässrige Ammoniaklösung, welche in Schritt a) verwendet wird, kann durch Lösen von Ammoniak in Wasser gewonnen werden. Die wässrige Ammoniaklösung bzw. deren Ausgangsstoffe Wasser und Ammoniak können auch aus dem Reaktionsprozess, insbesondere aus den Schritten b) und Schritt c), zurückgewonnen und dem Verfahren wieder zur Verfügung gestellt werden, was zur Wirtschaftlichkeit des Verfahrens beiträgt.

Die wässrige Ammoniaklösung in Schritt a) weist vorzugsweise eine Konzentration von bis zu 10 Gew.-% auf, wobei die Konzentration vorzugsweise mindestens 2 Gew.-% beträgt, jeweils bezogen auf das Gesamtgewicht der wässrigen Ammoniaklösung. Bevorzugter ist eine Konzentration von 3 bis 8 Gew.-%, und insbesondere bevorzugt ist eine Konzentration von 4 bis 6 Gew.-%, jeweils bezogen auf das Gesamtgewicht der wässrigen Ammoniaklösung.

Die Braunkohle kann mit unterschiedlicher Partikelgröße eingesetzt werden und kann insgesamt ohne vorherige Trennoperationen umgesetzt werden. Es können Braunkohlen unterschiedlicher Standorte (Herkunft) als Ausgangsmaterial eingesetzt werden. Außerdem kann Braunkohle im Gemisch mit technischen Ligninen der Zellstoffindustrie sowie der Holzhydrolyse, Braunkohle im Gemisch mit Lignin sowie Lignocellulosematerial aus dem Steam Explosion-Aufschluss zur Faserherstellung und Braunkohle im Gemisch mit Lignocellulosematerial wie Holz und Rindepartikel verwendet werden. Besagte Gemische können vorgemischt eingesetzt werden oder durch Mischen der einzelnen Bestandteile und der wässrigen Ammoniaklösung in Schritt a) erhalten werden.

Die Oxidation in Schritt b) kann in einem wässrig-ammoniakalischen Milieu mit einer Ammoniakkonzentration bis zu 7% durchgeführt werden. In einer Ausführungsform ist das sauerstoffhaltige Oxidationsmittel auszuwählen aus Luft, Sauerstoff, Luft/Sauerstoff-Gemischen, Ozon oder Wasserstoffperoxid. Weiterhin können im Rahmen der Oxidation in Schritt b) Katalysatoren verwendet werden, welche die Aktivität des Oxidationsmittels erhöhen.

Die Oxidation in Schritt b) erfolgt vorzugsweise über einen Zeitraum von 15 bis 300 min, bevorzugter 30 bis 240 min, insbesondere bevorzugt 45 bis 120 min. Durch die Oxidation der aus Schritt a) erhaltenen Suspension in dieser Zeitspanne mit dem sauerstoffhaltigen Oxidationsmittel entsteht eine Suspension, welche das Oxidationsprodukt der aus Schritt a) erhaltenen Suspension umfasst. Vorzugsweise wird das sauerstoffhaltige Oxidationsmittel direkt in die Suspension eingeführt, beispielsweise im Falle eines gasförmigen Oxidationsmittels durch Eintragen des Gases in die Reaktionsmischung unter Überdruck. Die aus Schritt b) resultierende Suspension wird im Rahmen des Verfahrens als "Produktsuspension" bezeichnet, welche das Oxidationsprodukt enthält.

Bei dem abgekühlten Produkt, welches in Schritt c) erhalten wird, handelt es sich um ein organisches Düngemittel aus oxidierend und ammonisierend behandelter Braunkohle im Sinne der vorliegenden Erfindung. Bevorzugt ist das organische Düngemittel das getrocknete Produkt. Dieses organische Düngemittel hat wie oben beschrieben Huminstoffcharakter und weist vorzugsweise einen Stickstoffgehalt von bis zu 8 Gew.-%, bezogen auf das Trockengewicht des Düngemittels, und ein C/N-Verhältnis von 7 bis 15, besonders bevorzugt ein C/N-Verhältnis von 9 bis 15, auf. Das in dieser Weise hergestellte organische Düngemittel weist außerdem vorzugsweise einen Restfeuchtegehalt von maximal 35 Gew.-%, bezogen auf das Gesamtgewicht des organischen Düngemittels, auf.

Das Verfahren zur Herstellung des organischen Düngemittels kann technologisch beispielsweise so umgesetzt werden, dass, wie in der EP 1 144 342 (WO 00/37394) beschrieben, die Braunkohle mit einer wässrigen Ammoniaklösung mit einem pH-Wert größer 9 bis 12 in eine Suspension überführt und anschließend in einem Reaktor zunächst ohne Zufuhr von Sauerstoff oder Luft alkalisch aktiviert und dabei in einer bis zu 0,5 h regelbaren Zeit auf eine Oxidationstemperatur von unter 100°C gebracht wird, anschließend das sauerstoffhaltige Oxidationsmittel, wobei es sich um ein Oxidationsgas handelt, bei einer Reaktionstemperatur unter 100°C und bei Luft oder Sauerstoff als Oxidationsgas unter Normaldruck und bei Luft-/Sauerstoffgemischen als Oxidationsgas bei Normaldruck mit einem Sauerstoffpartialdruck im Bereich von 0,02 MPa bis < 0,1 MPa in das Reaktionsgemisch jeweils nach dem Injektorprinzip eingespeist wird und schließlich die Zufuhr von Oxidationsgas geschlossen und die Reaktion abgebrochen und das Reaktionsgemisch (Produktgemisch) anschließend ohne weitere Oxidationsgaszufuhr auf eine für die weitere Aufarbeitung notwendige Temperatur abgekühlt wird, wobei die Abkühlzeit weniger als 1 h beträgt, und das organische Düngemittel als Dispersion im wässrigen Milieu durch Eindicken oder Trocknen gewonnen wird, wobei ein C/N-Verhältnis von 9 bis 15 erhalten wird. Bezüglich spezifischer Verfahrensschritte einer derartigen Verfahrensdurchführung wird auf die EP 1 144 342 (WO 00/37394) verwiesen.

In der internationalen Patentanmeldung WO 2017/186852 (Anmeldenummer PCT/EP2017/060060) wurde das Verfahren der EP 1 144 342 weiterentwickelt zu einem kontinuierlichen Verfahren, wobei die Ausgangsstoffe Braunkohle und wässrige Ammoniaklösung kontinuierlich in das Verfahren eingespeist werden und die Reaktion nicht unterbrochen werden muss. Dadurch kann das organische Düngemittel bei hohem Durchsatz der Ausgangsstoffe und geringem Energiebedarf hergestellt werden.

Demgemäß wird in einer weiteren Ausführungsform der vorliegenden Erfindung das organische Düngemittel aus oxidierend und ammonisierend behandelter Braunkohle des erfindungsgemäßen Dauerhumus-Wasserspeicherhybrids durch ein kontinuierliches Verfahren hergestellt, wie es in der WO 2017/186852 beschrieben wird, das die folgenden Schritte umfasst:
a) Zuführen von Braunkohlepartikeln und wässriger Ammoniaklösung sowie gegebenenfalls rückgeführtes Produkt von Schritt b) als Ausgangsstoffe in einen Dispergierkreislauf mit Dispergiervorrichtung, Rezirkulationsbehälter und Zirkulationspumpe, und Dispergieren der Ausgangsstoffe unter gleichzeitiger Zerkleinerung der Braunkohlepartikel bis eine Suspension aus Braunkohlepartikeln und wässriger Ammoniaklösung entsteht, welche dem Dispergierkreislauf entnommen und Schritt b) zugeführt wird;
b) Oxidieren der in Schritt a) erhaltenen Suspension in einem Oxidationsreaktor mit einem sauerstoffhaltigen Oxidationsmittel bei einer Temperatur von < 100°C, wobei eine Produktsuspension entsteht, welche vollständig Schritt c) oder teilweise Schritt c) und teilweise Schritt a) als Ausgangsstoff zugeführt wird;
c) Trocknen der in Schritt b) erhaltenen Produktsuspension bei einer Temperatur > 50°C bis auf einen Restfeuchtegehalt von maximal 30 Gew.-%, bezogen auf das Gesamtgewicht des getrockneten Produkts und Abkühlen des erhaltenen getrockneten Produkts;
wobei das organische Düngemittel einen Stickstoffgehalt von bis zu 8 Gew.-%, bezogen auf das Trockengewicht des Düngemittels, und ein C/N-Verhältnis von 7 bis 15 aufweist.

Der Begriff "kontinuierliches Verfahren" ist vorliegend derart zu verstehen, dass dem Verfahren kontinuierlich Ausgangsmaterialien, bei denen es sich vorliegend insbesondere um Braunkohle und wässrige Ammoniaklösung sowie gegebenenfalls rückgeführte Produktsuspension von Schritt b) handelt, zugeführt werden, welche über die Schritte a) bis c) in getrocknetes und abgekühltes organisches Düngemittel als Produkt überführt werden, ohne dass es zu einer Unterbrechung des Verfahrens bzw. der Verfahrensschritte kommen muss, um das organische Düngemittel zu bilden und es dem Prozess zu entziehen.

Der Begriff "Dispergierkreislauf", wie hierein verwendet, bezeichnet eine Anordnung, welche Dispergiervorrichtung, Rezirkulationsbehälter und Zirkulationspumpe umfasst. Bei der Dispergiervorrichtung handelt es sich vorzugsweise um ein geschlossenes System, sodass ein Gasaustausch mit der Umgebung unterbunden ist. Vorzugsweise beträgt die mittlere Verweilzeit der Mischung aus Braunkohlepartikeln und wässriger Ammoniaklösung sowie gegebenenfalls rückgeführtem Produkt von Schritt b) in der Dispergiervorrichtung 30 bis 300 min, stärker bevorzugt 45 bis 240 min, insbesondere bevorzugt 60 bis 180 min, bevor die resultierende Suspension dem Dispergierkreislauf entnommen und Schritt b) zugeführt wird. Die mittlere Verweilzeit berechnet sich wie bei der kontinuierlichen Verfahrensführung üblich aus dem Gesamtvolumen der Dispergiervorrichtung und den zugeführten bzw. abgeführten Volumina (z.B. wäre bei einem Volumen der Dispergiervorrichtung von 100 l und einer Zu- bzw. Abfuhr von 25 l/h die mittlere Verweilzeit 4 h).

Das kontinuierliche Verfahren erlaubt die Verwendung von Braunkohleteilchen als Ausgangsprodukt, deren Größe keine entscheidende Rolle spielt, da während des Verfahrens eine Zerkleinerung der Braunkohleteilchen erfolgt. Aus praktischen Erwägungen heraus werden vorzugsweise im Rahmen des kontinuierlichen Verfahrens Braunkohlepartikel mit mittleren Partikelgrößen von > 10 µm eingesetzt, wobei auch Braunkohlepartikel mit Partikelgrößen von z.B. bis zu 10 mm eingesetzt werden können. Stärker bevorzugt sind Braunkohlepartikel mit Partikelgrößen bis zu 5 mm, noch stärker bevorzugt bis zu 2 mm, noch stärker bevorzugt bis zu 1 mm, noch stärker bevorzugt bis zu 500 µm, insbesondere bevorzugt bis zu 100 µm. Bei den Braunkohlepartikeln handelt es sich vorzugsweise um Braunkohlestaub mit typischen mittleren Partikelgrößen im Bereich von > 10 bis 600 µm, insbesondere im Bereich von 200 bis 300 µm, also um derzeit üblichen kommerziellen Braunkohlestaub. Im Rahmen des kontinuierlichen Verfahrens ist aber z.B. auch die Verwendung von Rohbraunkohle mit Partikelgrößen bis zu 10 mm möglich, wobei die Rohbraunkohle im Dispergierkreislauf, insbesondere in der Dispergiervorrichtung zerkleinert wird.

Bei der Dispergiervorrichtung handelt es sich gleichzeitig um eine Mischvorrichtung und eine Zerkleinerungsvorrichtung, wobei die Mischung aus Braunkohlepartikeln und wässriger Ammoniaklösung sowie gegebenenfalls rückgeführtes Produkt von Schritt b) unter gleichzeitiger Zerkleinerung der Braunkohlepartikel solange in der Dispergiervorrichtung gemischt wird, bis eine Suspension aus zerkleinerten Braunkohlepartikel und wässriger Ammoniaklösung entsteht. Durch das Zerkleinern der Braunkohlepartikel in der Dispergiervorrichtung können Braunkohlepartikel mit einer relativ einheitlichen Partikelgrößenverteilung erhalten werden, was die Bildung einer besonders homogenen Suspension ermöglicht, die in Schritt b) der Oxidation zugeführt wird.

Vorzugsweise werden die Braunkohlepartikel in der Dispergiervorrichtung auf eine mittlere Partikelgröße von ≤ 10 µm, stärker bevorzugt auf mittlere Partikelgrößen von < 8 µm, noch stärker bevorzugt auf mittlere Partikelgrößen von < 6 µm, und insbesondere auf mittlere Partikelgrößen < 4 µm zerkleinert. Die Zerkleinerung der Braunkohlepartikel hat den Vorteil, dass die Reaktionsflächen deutlich vergrößert werden und die mittlere Größenverteilung relativ einheitlich ist, was die in Schritt b) durchgeführte Oxidationsreaktion begünstigt.

Wird als sauerstoffhaltiges Oxidationsmittel ein Gas verwendet, also beispielsweise Sauerstoff, sauerstoffangereicherte Luft, Luft oder Ozon, so wird dieses im kontinuierlichen Verfahren vorzugsweise mit einem Überdruck von bis zu 0,8 MPa mittels einer Gasdosierungsvorrichtung direkt in die Suspension eingetragen. "Überdruck" bedeutet im Rahmen der vorliegenden Erfindung, dass der Druck, mit dem das sauerstoffhaltige Oxidationsgas zugeführt wird, über Normaldruck liegt. Normaldruck entspricht einem Druck von 101325 Pa = 1,01325 bar. Demzufolge wird im Rahmen des kontinuierlichen Verfahrens das sauerstoffhaltige Gas mit einem Druck von > 0,101325 MPa zugeführt, wobei das sauerstoffhaltige Gas mit einem Überdruck von bis zu 0,8 MPa zugeführt werden kann. Vorzugsweise wird das sauerstoffhaltige Gas mit einem Überdruck von mindestens 0,15 MPa zugeführt. Stärker bevorzugt ist ein Überdruck von 0,2 bis 0,8 MPa, noch stärker bevorzugt ein Überdruck von 0,3 bis 0,7 MPa und insbesondere bevorzugt ein Überdruck von 0,4 bis 0,6 MPa.

Bei der Gasdosierungsvorrichtung kann es sich beispielsweise um eine Düsenlanze, einen Begasungsring oder ein Begasungsrührwerk handeln, welche sich in dem Reaktor befinden und mit der Suspension in Kontakt stehen bzw. in diese eintauchen. Vorzugsweise handelt es sich bei der Gasdosierungsvorrichtung um ein Begasungsrührwerk, mit dem die Suspension gleichzeitig in dem Reaktor gerührt werden kann, was den Eintrag des sauerstoffhaltigen Oxidationsgases in die Suspension und damit die Oxidationsreaktion begünstigt.

Alternativ kann das sauerstoffhaltige Oxidationsmittel auch in Lösung zugesetzt werden, beispielsweise in Form einer wässrigen Wasserstoffperoxidlösung. Ferner können gasförmige Oxidationsmittel in Lösung, vorzugsweise in wässriger Lösung, zugesetzt werden.

Der Oxidationsreaktor arbeitet in der Regel auch unter Überdruck, der etwas geringer ist als der Druck, mit dem das sauerstoffhaltige Gas eingeführt wird (sofern ein solches eingeführt wird). Bevorzugt arbeitet der Oxidationsreaktor unter einem Druck von mehr als 0,101325 MPa (Normaldruck) bis 0,7 MPa, stärker bevorzugt bis 0,6 MPa.

Die Trocknung in Schritt c) des kontinuierlichen Verfahrens wird bei einer Temperatur von > 50°C, vorzugsweise > 60°C, insbesondere bevorzugt > 70°C durchgeführt, wobei die Höchsttemperatur vorzugsweise 120°C beträgt. Die mittlere Verweilzeit für die Trocknung liegt in der Regel unter 20 Stunden, bevorzugt unter 10 Stunden, stärker bevorzugt unter 8 Stunden. Die Abkühlung des Produktes erfolgt vorzugsweise in einer rotierenden Trommel.

Vorzugsweise erfolgt die Abkühlung des getrockneten Produkts auf eine Temperatur von unter 50°C, insbesondere bevorzugt auf Raumtemperatur (20 bis 30°C). Die Dauer der Abkühlung beträgt üblicherweise 10 bis 240 min, vorzugsweise 20 bis 180 min, insbesondere bevorzugt 30 bis 120 min.

Bezüglich weiterer verfahrenstechnischer Aspekte des kontinuierlichen Herstellungsverfahrens des organischen Düngemittels wird auf die Beschreibung der WO 2017/186852 und die darin zitierten Druckschriften verwiesen.

Gemäß einer alternativen Ausführungsform der vorliegenden Erfindung umfasst das Dauerhumus-Wasserspeicherhybrid mindestens zwei wasserspeichernde Komponenten. Gemäß einer weiteren alternativen Ausführungsform umfasst das Dauerhumus-Wasserspeicherhybrid mindestens zwei wasserspeichernde Komponenten, wobei die mindestens zwei wasserspeichernden Komponenten mindestens ein wasserspeicherndes Material mineralischen Ursprungs und mindestens ein wasserspeicherndes Material organischen Ursprungs umfassen.

Das erfindungsgemäße Dauerhumus-Wasserspeicherhybrid kann in verschiedener Weise vorteilhaft verwendet werden. Insbesondere findet das erfindungsgemäße Dauerhumus-Wasserspeicherhybrid Verwendung als Pflanzensubstrat, als Zusatzstoff für Pflanzenerde und als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden, Eine derartige Verwendung des erfindungsgemäßen Dauerhumus-Wasserspeicherhybrids führt überraschenderweise zu einer größeren Ertragssteigerung als das organische Düngemittel oder die mindestens eine wasserspeichernde Komponente alleine. Diese Ertragssteigerung erfolgt zusätzlich zur Wirkung, die aus der Zugabe von gewöhnlichem Düngemittel, wie NPK-Flüssigdünger, resultiert, da die Ertragssteigerung auch bei gleichzeitiger Zugabe beispielsweise von Flüssigdünger beobachtet werden kann. In einer weiteren Ausführungsform der vorliegenden Erfindung führt die Verwendung des erfindungsgemäßen Dauerhumus-Wasserspeicherhybrids zu einer Ertragssteigerung von > 10%, vorzugsweise > 15%, verglichen mit dem organischen Düngemittel oder der mindestens einen wasserspeichernden Komponente alleine.

Weiterhin führt die Verwendung des erfindungsgemäßen Dauerhumus-Wasserspeicherhybrids als Pflanzensubstrat, als Zusatzstoff für Pflanzenerde oder als Substratzusatzstoff zur Bodenverbesserung überraschenderweise zu einem geringeren Wasserverbrauch als das organische Düngemittel oder die mindestens eine wasserspeichernde Komponente alleine.

Die Verwendung des erfindungsgemäßen Dauerhumus-Wasserspeicherhybrids als Pflanzensubstrat, als Zusatzstoff für Pflanzenerde oder als Substratzusatzstoff zur Bodenverbesserung führt außerdem überraschenderweise zu einer höheren Wasserkapazität und einem verbesserten Wasserausnutzungsgrad der Pflanzen, verglichen mit dem organischen Düngemittel oder der mindestens einen wasserspeichernden Komponente alleine.

Bei der Verwendung des erfindungsgemäßen Dauerhumus-Wasserspeicherhybrids auf wenig bindigen oder nichtbindigen Böden mit einem tiefen Feinkornanteil kann das erfindungsgemäße Dauerhumus-Wasserspeicherhybrid seine vorteilhafte Wirkung besonders gut entfalten.

Wird das erfindungsgemäße Dauerhumus-Wasserspeicherhybrid als Pflanzensubstrat eingesetzt, umfasst die mindestens eine wasserspeichernde Komponente mindestens ein Material organischen Ursprungs. Dabei ist das mindestens eine Material organischen Ursprungs auszuwählen aus Komposten, gerotteten Wirtschaftsdüngern, kohleartigen Produkten, Lignocellulosematerial, Holzfasern, Holzwolle, Kokosfasern, Hanffasern und Flachsfasern, vorzugsweise aus Komposten und gerotteten Wirtschaftsdüngern.

Bei Verwendung des erfindungsgemäßen Dauerhumus-Wasserspeicherhybrids als Pflanzensubstrat macht der Anteil an organischem Düngemittel beispielsweise 0,5-60,0 Vol.-%, vorzugsweise 0,5-40,0 Vol.-%, bevorzugter 0,5-20,0 Vol.-%, noch bevorzugter 1,0-10,0 Vol.-%, insbesondere bevorzugt 1,0-5,0 Vol.-%, und der Anteil an dem mindestens einen Material organischen Ursprungs beispielsweise 40,0-99,5 Vol.-%, vorzugsweise 60,0-99,5 Vol.-%, bevorzugter 80,0-99,5 Vol.-%, noch bevorzugter 90,0-99,0 Vol.-%, insbesondere bevorzugt 95,0-99,0 Vol.-%, jeweils bezogen auf das Gesamtvolumen des Dauerhumus-Wasserspeicherhybrids, aus. Wie das erfindungsgemäße Dauerhumus-Wasserspeicherhybrid als Pflanzensubstrat zu verwenden ist, unterscheidet sich nicht grundlegend von der Verwendung herkömmlicher Pflanzensubstrate in der Landwirtschaft und Gärtnerei und ist dem Fachmann bekannt.

Bei Verwendung des erfindungsgemäßen Dauerhumus-Wasserspeicherhybrids als Zusatzstoff für Pflanzenerde macht der Anteil an organischem Düngemittel 1,0-99,0 Vol.-%, vorzugsweise 5,0-99,0 Vol.-%, bevorzugter 10,0-95,0 Vol.-%, noch bevorzugter 30,0-95,0 Vol.-%, 50,0-95,0 Vol.-%, 60,0-95,0 Vol.-% oder 70,0-90,0 Vol.-%, insbesondere bevorzugt ungefähr 90,0 Vol.-%, und der Anteil an der mindestens einen wasserspeichernden Komponente 1,0-99,0 Vol.-%, vorzugsweise 1,0-95,0 Vol.-%, bevorzugter 5,0-90,0 Vol.-%, noch bevorzugter 5,0-70,0 Vol.-%, 5,0-50,0 Vol.-%, 5,0-40,0 Vol.-% oder 10,0-30,0 Vol.-%, insbesondere bevorzugt ungefähr 10,0 Vol.-%, jeweils bezogen auf das Gesamtvolumen des Dauerhumus-Wasserspeicherhybrids, aus. Wie das Dauerhumus-Wasserspeicherhybrid als Zusatzstoff für Pflanzenerde zu verwenden ist, unterscheidet sich nicht grundlegend von der Verwendung herkömmlicher Zusatzstoffe in der Landwirtschaft und Gärtnerei und ist dem Fachmann bekannt. Die in dieser Weise mit Zusatzstoffen versetzte Pflanzenerde kann wiederum als Pflanzensubstrat, beispielsweise im landwirtschaftlichen oder gärtnerischen Pflanzenanbau, verwendet werden.

Bei Verwendung des erfindungsgemäßen Dauerhumus-Wasserspeicherhybrids als Zusatzstoff für Pflanzenerde macht das Dauerhumus-Wasserspeicherhybrid bevorzugt 0,1-90,0 Vol.-%, bevorzugter 0,1-30,0 Vol.-%, noch bevorzugter 0,5-20,0 Vol.-%, insbesondere bevorzugt 1,0-10,0 Vol.-% der Pflanzenerde aus.

Bei Verwendung des erfindungsgemäßen Dauerhumus-Wasserspeicherhybrids als Substratzusatzstoff zur Bodenverbesserung macht der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, jeweils bezogen auf das Gesamtvolumen des Dauerhumus-Wasserspeicherhybrids, aus. Wie das Dauerhumus-Wasserspeicherhybrid als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden zu verwenden ist, unterscheidet sich nicht grundlegend von der Verwendung herkömmlicher Substratzusatzstoff zur Bodenverbesserung und Ertragssteigerung in der Landwirtschaft und Gärtnerei und ist dem Fachmann bekannt.

Das erfindungsgemäßen Dauerhumus-Wasserspeicherhybrids als Substratzusatzstoff zur Bodenverbesserung, beispielsweise für kohlenstoffarme, dauerhumusbedürftige oder mit Dauerhumus verbesserungsfähige, durchlässige und in Bezug auf den Wasserhaushalt verbesserungswürdige Substrate bzw. Böden ist vorzugsweise so zu verwenden, dass es 0,1-90,0 Gew.-%, bevorzugt 0,1-30,0 Gew.-%, bevorzugter 0,1-15,0 Gew.-%, noch bevorzugter 0,1-10,0 Gew.-% insbesondere bevorzugt 1,0-10,0 Gew.-% der obersten ca. 20 cm starken Bodenschicht ausmacht. Kohlenstoffarme, dauerhumusbedürftige oder mit Dauerhumus verbesserungsfähige, durchlässige und in Bezug auf den Wasserhaushalt verbesserungswürdige Substrate bzw. Böden sind beispielsweise Substrate bzw. Böden mit einem hohen Sand und/oder Kiesgehalt, einem geringen Anteil an organischer Bodensubstanz und einer hohen Wasserdurchlässigkeit. Das erfindungsgemäße Dauerhumus-Wasserspeicherhybrid kann auf solche kohlenstoffarme, dauerhumusbedürftige oder mit Dauerhumus verbesserungsfähige, durchlässige und in Bezug auf den Wasserhaushalt verbesserungswürdige Substrate bzw. Böden aufgetragen werden oder bis in eine Tiefe von 15-20 cm eingearbeitet werden. In einer bevorzugten Verwendungsform wird das Dauerhumus-Wasserspeicherhybrid bis in eine Tiefe von 20 cm eingearbeitet. Die Einzelkomponenten des Dauerhumus-Wasserspeicherhybrid können dabei einzeln aufgetragen bzw. eingearbeitet werden, beim Auftragen bzw. Einarbeiten kombiniert werden oder vorgemischt aufgetragen bzw. eigearbeitet werden.

Ein weiterer Aspekt der vorliegenden Erfindung ist ein Verfahren zur Herstellung eines Dauerhumus-Wasserspeicherhybrids, umfassend folgende Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100°C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch ein organisches Düngemittel gewonnen wird;
d) Kombinieren bzw. Mischen mindestens einer wasserspeichernden Komponente auszuwählen aus Materialien mineralischen oder organischen Ursprungs mit der Produktsuspension oder dem organischen Düngemittel des Schritts c), wodurch das Dauerhumus-Wasserspeicherhybrid erhalten wird;
wobei, in dem in dieser Weise hergestellten Dauerhumus-Wasserspeicherhybrid, der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht, wobei das organische Düngemittel ein C/N-Verhältnis von 7 bis 15 aufweist und gemessen am Gesamtstickstoff der Stickstoff chemisch unterschiedlich gebunden vorliegt, wobei
- 20 - 45% als Ammonium-Stickstoff vorliegen
- 55 - 80% organisch gebunden sind und
- bis zu 20% des Gesamtstickstoffs als Amid und
- bis zu 60% des Gesamtstickstoffs nicht als Amid hydrolysierbar organisch gebunden sind,
die Materialien mineralischen Ursprungs ausgewählt werden aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten und die Materialien organischen Ursprungs ausgewählt werden aus Komposten, gerotteten Wirtschaftsdüngern, kohleartigen Produkten, Lignocellulosematerial, Holzfasern, Holzwolle, Kokosfasern, Hanffasern und Flachsfasern.

Die Bedeutung von "Kombinieren" in Schritt d) des Herstellungsverfahrens ist breiter auszulegen als "Mischen" und umfasst unverzügliches Mischen, aber auch die Portionierung der Einzelbestandteile des Dauerhumus-Wasserspeicherhybrids, insbesondere des organischen Düngemittels und der mindestens einen wasserspeichernden Komponente, in Mengen, die den erfindungsgemäßen Volumenanteilen im Hybrid entsprechen, und das schlussendliche Vermischen bzw. Kombinieren vor oder im Zuge der Verwendung als Pflanzensubstrat, Zusatzstoff für Pflanzenerde oder Substratzusatzstoff in kohlenstoffarmen, dauerhumusbedürftigen oder mit Dauerhumus verbesserungsfähigen, durchlässigen und in Bezug auf den Wasserhaushalt verbesserungswürdigen Substraten bzw. Böden. In einer Ausführungsform des Herstellungsverfahrens des Dauerhumus-Wasserspeicherhybrids erfolgt das Mischen des organischen Düngemittels und der mindestens einen wasserspeichernden Komponente während der Trocknung oder des Abkühlens des organischen Düngemittels in Schritt c) oder im Anschluss daran. In einer alternativen Ausführungsform des Herstellungsverfahrens werden die mindestens eine wasserspeichernde Komponente und das organische Düngemittel in solchen Mengen portioniert, dass sie den erfindungsgemäßen Volumenanteilen des Hybrids entsprechen, die schließlich kurz vor oder während der Verwendung vermischt werden. Portionieren ist erfindungsgemäß als tatsächliches Portionieren der Einzelkomponenten des Hybrids oder als Verwendungsanweisung zu verstehen, die angibt in welchen Mengen (Portionen) die Einzelkomponenten des Hybrids bei der erfindungsgemäßen Verwendung zu vermischen bzw. zu kombinieren sind. Bevorzugt bedeutet "Kombinieren" in Bezug auf das erfindungsgemäße Verfahren "Mischen".

In Schritt d) können auch zwei, drei, vier, etc. wasserspeichernde Komponenten verwendet werden, wobei dann vorzugsweise mindestens eine wasserspeichernde Komponente mineralischen Ursprungs und mindestens eine wasserspeichernde Komponente organischen Ursprungs ist.

Bezüglich verfahrenstechnischer Aspekte und spezieller Ausführungsformen der Verfahrensschritte a) bis c) wird auf die detaillierte Beschreibung des Verfahrens zur Herstellung des organischen Düngemittels des erfindungsgemäßen Dauerhumus-Wasserspeicherhybrids verwiesen (siehe oben).

Das Dauerhumus-Wasserspeicherhybrid erhältlich nach dem erfindungsgemäßen Herstellungsverfahren hat die oben beschriebenen Produktmerkmale des erfindungsgemäßen Dauerhumus-Wasserspeicherhybrids, insbesondere die überraschenden vorteilhaften Eigenschaften, die sich bei der Verwendung als Pflanzensubstrat, als Zusatzstoff für Pflanzenerde oder als Substratzusatzstoff zur Bodenverbesserung zeigen.

### Ausführungsbeispiele

### Beispiel 1

Es wurden verschiedene erfindungsgemäße Dauerhumus-Wasserspeicherhybride hergestellt. Hierfür wurden landwirtschaftliche oder gärtnerische Pflanzsubstrate mit wasserspeichernden, porösen, quellfähigen Materialien - Komposte, Pflanzenschnitzel, Kokos, Gesteine, Mineralien, Mineralprodukten und Novihum® (Novihum® ist der Markenname eines organischen Düngemittels aus oxidierend und ammonisierend behandelter Braunkohle; die Herstellung kann wie in der EP 1 144 342 (das heißt der WO 00/37394 beschrieben erfolgen) - sei es als Gemisch oder in Kombination - versetzt und miteinander vermengt. Alternativ wurden erfindungsgemäße Dauerhumus-Wasserspeicherhybride aus Komposten, Pflanzenschnitzeln, Kokos, Gesteinen, Mineralien, Mineralprodukten und Novihum® direkt als eigenständige landwirtschaftliche oder gärtnerische Pflanzsubstrate zur Kulturpflanzenaufzucht hergestellt, wobei diese Hybride zur Verwendung als Pflanzensubstrate mindestens eine wasserspeichernde Komponente aus Materialien organischen Ursprungs, wie Komposte, Pflanzenschnitzel oder Kokos, umfassten. Wasserspeichernde, quellfähige Gesteine und Mineralien oder Mineralprodukte sind Tonminerale, tonmineralhaltige Substanzen (z.B. Bentonit), verarbeitete Mineralien und Gesteine wie Blähton oder Blähschiefer. Der Anteil an Novihum® betrug zwischen 1 Vol.-% und 99 Vol.-% Als Pflanzensubstratzusatzstoff für die oberste 20 cm starke Bodenschicht beläuft sich die Aufwandmenge des Gemisches bzw. der Kombination auf zwischen 0,1 Gew.-% und 10 Gew.-%. Als Zusatzstoff für Pflanzenerde bzw. als eigenständiges Pflanzensubstrat beläuft sich die Aufwandmenge des Gemisches bzw. der Kombination auf zwischen 0,1 Vol.-% und 100 Vol.-%.

Das verwendete Novihum-Produkt hatte die in der WO 00/37394, Beispiel 1 angegebene Zusammensetzung, das heißt gemäß der Elementaranalyse:
C = 53,50%
H = 5,32%
N = 5,97%
S = 0,45%.

Das C/N-Verhältnis betrug damit 8,96. Die Bindungsformen des Stickstoffs (in % des Gesamtstickstoffgehalts) betrugen:
Ammoniumstickstoff = 32,8%
organisch gebundener Stickstoff = 67,2%
Amid-Stickstoff = 11,1%
fester organische gebundener Stickstoff = 56,1%.

Entsprechend können auch die Produkte der weiteren Beispiele der WO 00/37394 eingesetzt werden, und ihre Verwendung führt zu vergleichbaren oder besseren Ergebnissen.

**Tabelle 1: Anwendungsbeispiele**

| **Nr.** | **Novihum®-Wasserspeicher Kombination** | | **Applikationsbeispiel** | **Anteil der Kombination in der Anwendung** | |
|---|---|---|---|---|---|
| | Wasserspeicher, Anteil | Novihum | | Anteil an Oberbodenschicht | Anteil an Planzensubstrat/ -erde |
| | (Vol.-%) | (Vol.-%) | | (Gew.-% / 20 cm) | (Vol.-%) |
| A | 99% | 1 % | Pflanzsubstrat zur Kulturpflanzenaufzucht | - | 100%⁽¹⁾ |
| B | 80% | 20% | Zugabe zu kohlenstoffarmem, durchlässigem Boden | 10% | - |
| C | 20% | 80% | Zugabe zu kohlenstoffarmem, durchlässigem Boden | 2% | - |
| D | 10% | 90% | Zusatzstoff für Pflanzerden | - | 4% |

| | | | | | |
|---|---|---|---|---|---|
| ⁽¹⁾ Bei der Verwendung des Dauerhumus-Wasserspeicherhybrids als Pflanzensubstrat wird mindestens eine wasserspeichernde Komponente organischen Ursprungs eingesetzt. | | | | | |

### Beispiel 2

### Anwendungsbeispiel für Hybrid aus organischem Düngemittel und organischem Wasserspeicher

Zum Vergleich wurden vier Versuchsvarianten mit Schlangengurken in einem Sandboden im geschützten Anbau (evaporationsgekühltes Gewächshaus) gegenübergestellt. Als organisches Düngemittel aus oxidierend und ammonisierend behandelter Braunkohle wurde Novihum® verwendet und als wasserspeichernde Komponente organischen Ursprungs wurde Rinderdungkompost verwendet:

### Variante 1:

0,5 kg/m² Novihum® sowie 1,0 kg/m² Rinderdungkompost wurden 15 cm tief in die Bodenoberfläche eingearbeitet.

### Variante 2:

1,0 kg/m² Rinderdungkompost wurden 15 cm tief in die Bodenoberfläche eingearbeitet.

### Variante 3:

0,5 kg/m² Novihum® wurden 15 cm tief in die Bodenoberfläche eingearbeitet.

### Variante 4:

Es wurde weder Novihum® noch Rinderdungkompost eingearbeitet. Es erfolgte lediglich die Gabe von Wasser und Nährstoffen analog zu den Varianten 1 bis 3.

Alle Varianten erhielten dieselben Nährstoff- und Wassermengen. Die Kultivationsdauer betrug 3 Monate.

**Tabelle 2: Novihum®-Kompost Hybrid**

| | **Variante 1** | **Variante 2** | **Variante 3** | **Variante 4** |
|---|---|---|---|---|
| Novihum® (0,5 kg/m²) | + | - | + | - |
| Kompost (1 kg/m²) | + | + | - | - |
| Düngung (NPK-flüssig) | + | + | + | + |
| Ertrag (kg/m²) | 1,08 | 0,93 | 0,76 | 0,61 |
| Ertragsdifferenz zu V4 | 77% | 52% | 25% | 0% |

| | | | | |
|---|---|---|---|---|
| +: Bestandteil dazugegeben; -: Bestandteil nicht dazugegeben; NPK-flüssig; Stickstoff-Phosphat-Kalium Flüssigdünger | | | | |

Überraschenderweise zeigte Variante 1, dass die Kombination aus Novihum® und Wasserspeicher organischen Ursprungs eine additive ertragssteigernde Wirkung, die grösser war als die Wirkung der jeweiligen Einzelkomponenten. In allen vier Versuchsvarianten wurde außerdem gewöhnlicher Flüssigdünger (NPK Flüssigdünger) verwendet. Die ertragssteigernde Wirkung erfolgt somit zusätzlich zur Ertragsteigerung die durch den gewöhnlichen Flüssigdünger erreicht wird. Aus dem Vergleich von Variante 1 und Variante 2 ergab sich außerdem, dass die Kombination von organischem Düngemittel und Wasserspeicher organischen Ursprungs einen 16% bzw. 42% größeren Ertrag einbrachte als der Wasserspeicher organischen Ursprungs bzw. das organische Düngemittel alleine.

### Beispiel 3

### Anwendungsbeispiel für Hybrid aus organischem Düngemittel und mineralischem Wasserspeicher

Zum Vergleich wurden auf einen sandigen, sehr wasserdurchlässigen Boden vier Versuchsvarianten gegenübergestellt. Als Testkultur wurde Gartenrasen verwendet. Als organisches Düngemittel aus oxidierend und ammonisierend behandelter Braunkohle wurde Novihum® verwendet und als wasserspeichernde Komponente mineralischen Ursprungs wurde Bentonit verwendet. Die Nährstoff- und Wasserversorgen war für alle Varianten gleich:

| | |
|---|---|
| Variante 1: | 0,5 kg/m² Novihum® und 0,5 kg/m² Bentonit |
| Variante 2: | 1,0 kg/m² Novihum® |
| Variante 3: | 1,0 kg/m² Bentonit |
| Variante 4: | Unbehandelt |

Wie aus der vorgestellte Versuchsanordnung hervorgeht, kam jeweils dieselben Gesamtmengen an Novihum®, Wasserspeicher, und Novihum®+Wasserspeicher zur Anwendung. Sechs Wochen nach Rasenaussaat wurden die vier Varianten auf Deckungsgrad (Anteil der durch Bewuchs abgedeckten Fläche), Auflaufergebnis (Anteil der gekeimten Samen an der Gesamtsamenmenge) und Gesamteindruck (Farbe, Dichte, Blattformen) überprüft.

Sechs Wochen nach Rasenaussaat zeigten sich folgende Befunde:
A) Der Deckungsgrad nahm in der Reihenfolge der Varianten 1,3,2,4 ab.
B) Das Auflaufergebnis nahm in der Reihenfolge der Varianten 1,3,2=4 ab.
C) Der Gesamteindruck nahm in der Reihenfolge der Varianten 1,3,2,4 ab.

Wie aus Ergebnis *B) Auflaufergebnis* hervorgeht, hat das Dauerhumus-Wasserspeicherhybrid, aus organischem Düngemittel und Wasserspeicher mineralischen Ursprungs eine synergistische Wirkung verglichen mit dem Dauerhumus und dem Wasserspeicher alleine. Analoge Ergebnisse zeigen sich für Hybride aus Novihum® und Tongranulat, Holzkohle oder Blähschiefer. Für andere in Bezug auf Porosität bzw. Wasserspeicherfähigkeit gleichartige Substanzen sind vergleichbare Ergebnisse zu erwarten.

## Patentansprüche

1. Dauerhumus-Wasserspeicherhybrid umfassend ein organisches Düngemittel aus oxidierend und ammonisierend behandelter Braunkohle und mindestens eine wasserspeichernde Komponente ausgewählt aus Materialien mineralischen oder organischen Ursprungs, wobei der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht, wobei
das organische Düngemittel ein C/N-Verhältnis von 7 bis 15 aufweist und gemessen am Gesamtstickstoff der Stickstoff chemisch unterschiedlich gebunden vorliegt, wobei
- 20 - 45% als Ammonium-Stickstoff vorliegen
- 55 - 80% organisch gebunden sind und
- bis zu 20% des Gesamtstickstoffs als Amid und
- bis zu 60% des Gesamtstickstoffs nicht als Amid hydrolysierbar organisch gebunden sind,
die Materialien mineralischen Ursprungs ausgewählt werden aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten und
die Materialien organischen Ursprungs ausgewählt werden aus Komposten, gerotteten Wirtschaftsdüngern, kohleartigen Produkten, Lignocellulosematerial, Holzfasern, Holzwolle, Kokosfasern, Hanffasern und Flachsfasern.

2. Dauerhumus-Wasserspeicherhybrid gemäß Anspruch 1, wobei der Anteil an organischem Düngemittel 0,5-20,0 Vol.-%, vorzugsweise 1,0-10,0 Vol.-%, insbesondere bevorzugt 1,0-5,0 Vol.-%, und der Anteil an der mindestens einen wasserspeichernden Komponente 80-99,5 Vol.-%, vorzugsweise 90,0-99,0 Vol.-%, insbesondere bevorzugt 95,0-99,0 Vol.-%, ausmacht.

3. Dauerhumus-Wasserspeicherhybrid gemäß Anspruch 1, wobei der Anteil an organischem Düngemittel 20,0-99,0 Vol.-%, vorzugsweise 50,0-95,0 Vol.-%, noch bevorzugter 70,0-90,0 Vol.-%, insbesondere bevorzugt ungefähr 90,0 Vol.-%, und der Anteil an der mindestens einen wasserspeichernden Komponente 1,0-80,0 Vol.-%, vorzugsweise 5,0-50,0 Vol.-%, noch bevorzugter 10,0-30,0 Vol.-%, insbesondere bevorzugt ungefähr 10,0 Vol.-%, ausmacht.

4. Dauerhumus-Wasserspeicherhybrid gemäß Anspruch 1, wobei der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, ausmacht.

5. Dauerhumus-Wasserspeicherhybrid gemäß einem der vorhergehenden Ansprüche, wobei das organische Düngemittel nach einem Verfahren erhältlich ist, umfassend die Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100°C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch das organische Düngemittel gewonnen wird.

6. Verwendung des Dauerhumus-Wasserspeicherhybrids gemäß einem der Ansprüche 1-5 als Zusatzstoff für Pflanzenerde oder Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden.

7. Verwendung des Dauerhumus-Wasserspeicherhybrids gemäß Anspruch 6 als Zusatzstoff für Pflanzenerde, wobei das Hybrid 0,1-90,0 Vol.-%, vorzugsweise 0,5-20,0 Vol.-%, insbesondere bevorzugt 1,0-10,0 Vol.-%, der Pflanzenerde ausmacht.

8. Verwendung des Dauerhumus-Wasserspeicherhybrids gemäß Anspruch 6 als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden, wobei das Hybrid 0,1-90,0 Gew.-%, vorzugsweise 0,1-30,0 Gew.-%, noch bevorzugter 0,1-15,0 Gew.-%, insbesondere bevorzugt 1,0-10,0 Gew.-% der obersten 20 cm starken Bodenschicht ausmacht.

9. Verwendung des Dauerhumus-Wasserspeicherhybrids gemäß einem der Ansprüche 1-5 als Pflanzensubstrat, wobei die mindestens eine wasserspeichernde Komponente mindestens ein Material organischen Ursprungs umfasst.

10. Verfahren zur Herstellung eines Dauerhumus-Wasserspeicherhybrids, umfassend die folgenden Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100°C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch ein organisches Düngemittel gewonnen wird;
d) Kombinieren bzw. Mischen mindestens einer wasserspeichernden Komponente auszuwählen aus Materialien mineralischen oder organischen Ursprungs mit der Produktsuspension oder dem organischen Düngemittel des Schritts c), wodurch das Dauerhumus-Wasserspeicherhybrid erhalten wird;
wobei, in dem in dieser Weise hergestellten Dauerhumus-Wasserspeicherhybrid, der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht, wobei das organische Düngemittel ein C/N-Verhältnis von 7 bis 15 aufweist und gemessen am Gesamtstickstoff der Stickstoff chemisch unterschiedlich gebunden vorliegt, wobei
- 20 - 45% als Ammonium-Stickstoff vorliegen
- 55 - 80% organisch gebunden sind und
- bis zu 20% des Gesamtstickstoffs als Amid und
- bis zu 60% des Gesamtstickstoffs nicht als Amid hydrolysierbar organisch gebunden sind,
die Materialien mineralischen Ursprungs ausgewählt werden aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten und die Materialien organischen Ursprungs ausgewählt werden aus Komposten, gerotteten Wirtschaftsdüngern, kohleartigen Produkten, Lignocellulosematerial, Holzfasern, Holzwolle, Kokosfasern, Hanffasern und Flachsfasern.

11. Dauerhumus-Wasserspeicherhybrid erhältlich nach dem Verfahren gemäß Anspruch 10.

## Claims

1. A stable humus water storage hybrid comprising an organic fertilizer of browncoal that had been subjected to an oxidizing and ammoniating treatment and at least one water storing component selected from materials of mineral or organic origin, wherein the proportion of the organic fertilizer makes up 0.5-99.9 % (v/v), preferably 1.0-90.0 % (v/v), and the proportion of the at least one water storing component makes up 0.1-99.5 % (v/v), preferably 10.0-99.0 % (v/v), each with respect to the total volume of the stable humus water storage hybrid, wherein
the organic fertilizer has a C/N ration of 7 to 15 and the nitrogen is present chemically bound in different ways compared to the total nitrogen, wherein
- 20-45 % are present as ammonium nitrogen,
- 55-80 % are organically bound, and
- up to 20 % of the total nitrogen are bound as amide, and
- up to 60 % of the total nitrogen are organically bound as not being hydrolysable as amide,
the materials of mineral origin are selected from clay minerals, clay minerals-containing substances, perlites, sheet silicates, clay, bentonite, hectorite, montmorillonite, vermiculite, zeolites, sepiolite, attapulgite, calcinated clay, expanded clay, expanded shale, volcanic ash, pumice, silical gel, and smectites, and
the materials of organic origin are selected from composts, rotten organic fertilizers, coal-like products, lignocellulose material, wood fibers, wood wool, coconut fibers, hemp fibers, and flax fibers.

2. The stable humus water storage hybrid according to claim 1, wherein the proportion of organic fertilizer makes up 0.5-20.0 % (v/v), preferably 1.0-10.0 % (v/v), especially preferred 1.0-5.0 % (v/v), and the proportion of the at least one water storing component makes up 80-99.5 % (v/v), preferably 90.0-99.0 % (v/v), especially preferred 95.0-99.0 % (v/v).

3. The stable humus water storage hybrid according to claim 1, wherein the proportion of the organic fertilizer makes up 20.0-99.0 % (v/v), preferably 50.0-95.0 % (v/v), more preferably 70.0-90.0 % (v/v), especially preferred approximately 90.0 % (v/v), and the proportion of the at least one water storing component makes up 1.0-80.0 % (v/v), preferably 5.0-50.0 % (v/v), more preferably 10.0-30.0 % (v/v), especially preferred approximately 10.0 % (v/v).

4. The stable humus water storage hybrid according to claim 1, wherein the proportion of the organic fertilizer makes up 0.5-99.5 % (v/v), preferably 5.0-95.0 % (v/v), more preferably 10.0-90.0 % (v/v), especially preferred 20.0-80.0 % (v/v), and the proportion of the at least one water storing component makes up 0.5-99.5 % (v/v), preferably 5.0-95.0 % (v/v), more preferably 10.0-90.0 % (v/v), especially preferred 20.0-80.0 % (v/v).

5. The stable humus water storage hybrid according to any one of the preceding claims, wherein the organic fertilizer is obtained by a method comprising the method steps of:
a) converting browncoal and an aqueous ammonia solution having a pH value greater 9 to 12 into a suspension and alkaline activation of the suspension first without supplying an oxygen-containing oxidant;
b) feeding the oxygen-containing oxidant into the suspension of browncoal and the aqueous ammonia solution, wherein the oxidation runs at a reaction temperature <100°C and a pressure of 0.1-1 MPa;
c) concentrating the product suspension obtained in step b) to a dispersion in the aqueous milieu or drying the product suspension obtained in step b) to a dried product, without supplying the oxygen-containing oxidant, and finally cooling thereby recovering the organic fertilizer.

6. Use of the stable humus water storage hybrid according to any one of claims 1-5 as an additive for planting soil or substrate additive for soil conditioning for low-carbon substrates or soils, respectively that are in need of stable humus or able to be conditioned with stable humus, are permeable, and worthy of improvement with respect to the water regime.

7. Use of the stable humus water storage hybrid according to claim 6 as an additive for planting soil, wherein the hybrid makes up 0.1-90.0 % (v/v), preferably 0.5-20.0 % (v/v), especially preferred 1.0-10.0 % (v/v) of the planting soil.

8. Use of the stable humus water storage hybrid according to claim 6 as a substrate additive for soil conditioning for low-carbon substrates or soils, respectively that are in need of stable humus or able to be conditioned with stable humus, are permeable, and worthy of improvement with respect to the water regime, wherein the hybrid makes up 0.1-90.0 % (w/w), preferably 0.1-30.0 % (w/w), more preferably 0.1-15.0 % (w/w), especially preferred 1.0-10.0 % (w/w) of the uppermost 20 cm thick soil layer.

9. Use of the stable humus water storage hybrid according to any one of claims 1-5 as a plant substrate, wherein the at least one water storing component comprises at least one material of organic origin.

10. A method for preparing a stable humus water storage hybrid comprising the following method steps:
a) converting browncoal and an aqueous ammonia solution having a pH value greater 9 to 12 into a suspension and alkaline activation of the suspension first without supplying an oxygen-containing oxidant;
b) feeding the oxygen-containing oxidant into the suspension of browncoal and the aqueous ammonia solution, wherein the oxidation runs at a reaction temperature <100°C and a pressure of 0.1-1 MPa;
c) concentrating the product suspension obtained in step b) to a dispersion in the aqueous milieu or drying the product suspension obtained in step b) to a dried product, without supplying the oxygen-containing oxidant, and finally cooling thereby recovering the organic fertilizer;
d) combining or mixing, respectively at least one water storing component to be selected from materials of mineral or organic origin with the product suspension or the organic fertilizer of step c) thereby obtaining the stable humus water storage hybrid;
wherein in the stable humus water storage hybrid prepared in this way the proportion of the organic fertilizer makes up 0.5-99.9 % (v/v), preferably 1.0-90.0 % (v/v), and the proportion of the at least one water storing component makes up 0.1-99.5 % (v/v), preferably 10.0-99.0 % (v/v), each with respect to the total volume of the stable humus water storage hybrid, wherein the organic fertilizer has a C/N ration of 7 to 15 and the nitrogen is present chemically bound in different ways compared to the total nitrogen, wherein
- 20-45 % are present as ammonium nitrogen
- 55-80 % are organically bound, and
- up to 20 % of the total nitrogen are bound as amide, and
- up to 60 % of the total nitrogen are organically as not being hydrolysable as amide,
the materials of mineral origin are selected from clay minerals, clay minerals-containing substances, perlites, sheet silicates, clay, bentonite, hectorite, montmorillonite, vermiculite, zeolites, sepiolite, attapulgite, calcinated clay, expanded clay, expanded shale, volcanic ash, pumice, silical gel, and smectites, and the materials of organic origin are selected from composts, rotten organic fertilizers, coal-like products, lignocellulose material, wood fibers, wood wool, coconut fibers, hemp fibers, and flax fibers.

11. The stable humus water storage hybrid obtainable according to the method according to claim 10.

## Revendications

1. Hybride de stockage d'eau pour humus stable comprenant un engrais organique obtenu à partir de lignite traitée par oxydation et ammoniaquage et au moins un composant de stockage d'eau choisi parmi des matériaux d'origine minérale ou organique, la proportion de l'engrais organique étant de 0,5 - 99,9 % en volume, de préférence de 1,0 - 90,0 % en volume, et la proportion de l'au moins un composant de stockage d'eau étant de 0,1 - 99,5 % en volume, de préférence de 10,0 - 99,0 % en volume, dans chaque cas par rapport au volume total de l'hybride de stockage d'eau pour humus stable,
l'engrais organique ayant un rapport C/N de 7 bis 15 et, mesuré par rapport à l'azote total, l'azote étant chimiquement lié différemment, dans lequel
- 20 - 45% sont disponibles sous forme d'azote ammoniacal
- 55 - 80% sont organiquement liés et
- jusqu'à 20% de l'azote total sont organiquement liés de manière hydrolysable sous forme d'amide et
- jusqu'à 60% de l'azote total ne sont pas organiquement liés de manière hydrolysable sous forme d'amide,
dans lequel les matériaux d'origine minérale sont choisis parmi les minéraux argileux, les substances contenant des minéraux argileux, les perlites, les silicates en feuille, l'argile, la bentonite, l'hectorite, la montmorillonite, la vermiculite, les zéolites, la sepiolite, l'attapulgite, l'argile cuite, l'argile expansée, le schiste expansé, les cendres volcaniques, la pierre ponce, le gel de silice et les smectites, et les matières d'origine organique sont choisis parmi le compost, le fumier de ferme pourri, les produits apparentés au charbon, les matières ligno-cellulosiques, les fibres de bois, la laine de bois, les fibres de noix de coco, les fibres de chanvre et les fibres de lin.

2. Hybride de stockage d'eau pour humus stable selon la revendication 1, dans lequel la proportion de l'engrais organique est de 0,5 - 20,0 % en volume, de préférence de 1,0 - 10,0 % en volume, de manière particulièrement préférée de 1,0 - 5,0 % en volume, et la proportion de l'au moins un composant de stockage d'eau est de 80 - 99,5 % en volume, de préférence de 90,0 - 99,0 % en volume, de manière particulièrement préférée de 95,0 - 99,0 % en volume.

3. Hybride de stockage d'eau pour humus stable selon la revendication 1, dans lequel la proportion de l'engrais organique est de 20,0 - 99,0 % en volume, de préférence de 50,0 - 95,0 % en volume, de préférence encore de 70,0 - 90,0 % en volume, de manière particulièrement préférée d'environ 90,0 % en volume, et la proportion de l'au moins un composant de stockage d'eau est de 1,0 - 80,0 % en volume, de préférence de 5,0 - 50,0 % en volume, de préférence encore de 10,0 - 30,0 % en volume, de manière particulièrement préférée d'environ 10,0 % en volume.

4. Hybride de stockage d'eau pour humus stable selon la revendication 1, dans lequel la proportion de l'engrais organique est de 0,5 - 99,5 % en volume, de préférence de 5,0 - 95,0 % en volume, de préférence encore de 10,0 - 90,0 % en volume, de manière particulièrement préférée de 20,0 - 80,0 % en volume, et la proportion de l'au moins un composant de stockage d'eau est de 0,5 - 99,5 % en volume, de préférence de 5,0 - 95,0 % en volume, de préférence encore de 10,0 - 90,0 % en volume, de manière particulièrement préférée de 20,0 - 80,0 % en volume.

5. Hybride de stockage d'eau pour humus stable selon l'une des revendications précédentes, dans lequel l'engrais organique peut être obtenu par un procédé comprenant les étapes:
a) transfert de lignite et d'une solution aqueuse d'ammoniaque avec une valeur de pH supérieure à 9 bis 12 dans une suspension, et activation alcaline de la suspension, initialement sans ajout d'un agent oxydant contenant de l'oxygène;
b) alimentation de l'agent oxydant contenant de l'oxygène dans la suspension de lignite et de solution aqueuse d'ammoniaque, l'oxydation ayant lieu à une température de réaction de < 100°C et une pression de 0,1 - 1 MPa;
c) épaississement de la suspension de produit obtenue à l'étape b) pour donner une dispersion dans un milieu aqueux, ou séchage de la suspension de produit obtenue à l'étape b) pour donner un produit séché, sans ajout de l'agent oxydant contenant de l'oxygène, et, finalement, refroidissement, ainsi produisant l'engrais organique.

6. Utilisation de l'hybride de stockage d'eau pour humus stable selon l'une des revendications de 1 - 5 en tant qu'additif pour terres végétales ou en tant qu'additif de substrat pour l'amélioration du sol pour les substrats ou les sols perméables et à améliorer en termes de bilan hydrique, ayant une faible teneur en carbone, nécessitant un humus permanent, ou susceptibles d'être améliorés avec de l'humus permanent.

7. Utilisation de l'hybride de stockage d'eau pour humus stable selon la revendication 6 en tant qu'additif pour terres végétales, l'hybride constituant de 0,1 - 90,0 % en volume, de préférence de 0,5 - 20,0 % en volume, de manière particulièrement préférée de 1,0 - 10,0 % en volume de la terre végétale.

8. Utilisation de l'hybride de stockage d'eau pour humus stable selon la revendication 6 en tant qu'additif de substrat pour l'amélioration du sol pour les substrats ou les sols perméables et à améliorer en termes de bilan hydrique, ayant une faible teneur en carbone, nécessitant un humus permanent, ou susceptibles d'être améliorés avec de l'humus permanent, l'hybride constituant de 0,1 - 90,0 % en poids, de préférence de 0,1 - 30,0 % en poids, de préférence encore de 0,1 - 15,0 % en poids, de manière particulièrement préférée de 1,0 - 10,0 % en poids de la couche de sol supérieure d'une épaisseur de 20 cm.

9. Utilisation de l'hybride de stockage d'eau pour humus stable selon l'une des revendications de 1 - 5 comme substrat végétal, l'au moins un composant de stockage d'eau comprenant au moins un matériau d'origine organique.

10. Procédé de production d'un hybride de stockage d'eau pour humus stable, comprenant les étapes suivantes:
a) transfert de lignite et d'une solution aqueuse d'ammoniaque avec une valeur de pH supérieure à 9 bis 12 dans une suspension, et activation alcaline de la suspension, initialement sans ajout d'un agent oxydant contenant de l'oxygène;
b) alimentation de l'agent oxydant contenant de l'oxygène dans la suspension de lignite et de solution aqueuse d'ammoniaque, l'oxydation ayant lieu à une température de réaction de < 100°C et une pression de 0,1 - 1 M Pa;
c) épaississement de la suspension de produit obtenue à l'étape b) pour donner une dispersion dans un milieu aqueux, ou séchage de la suspension de produit obtenue à l'étape b) pour donner un produit séché, sans ajout de l'agent oxydant contenant de l'oxygène, et, finalement, refroidissement, ainsi produisant un engrais organique;
d) combinaison ou mélange d'au moins un composant de stockage d'eau, à choisir parmi des matériaux d'origine minérale ou organique, avec la suspension de produit ou l'engrais organique de l'étape c), ainsi produisant l'hybride de stockage d'eau pour humus stable;
dans lequel, dans l'hybride de stockage d'eau pour humus stable ainsi produit, la proportion de l'engrais organique est de 0,5 - 99,9 % en volume, de préférence de 1,0 - 90,0 % en volume, et la proportion de l'au moins un composant de stockage d'eau est de 0,1 - 99,5 % en volume, de préférence de 10,0 - 99,0 % en volume, dans chaque cas par rapport au volume total de l'hybride de stockage d'eau pour humus stable, l'engrais organique ayant un rapport C/N de 7 bis 15 et, mesuré par rapport à l'azote total, l'azote étant chimiquement lié différemment, dans lequel
- 20 - 45% sont disponibles sous forme d'azote ammoniacal
- 55 - 80% sont organiquement liés et
- jusqu'à 20% de l'azote total sont organiquement liés de manière hydrolysable sous forme d'amide et
- jusqu'à 60% de l'azote total ne sont pas organiquement liés de manière hydrolysable sous forme d'amide,
dans lequel les matériaux d'origine minérale sont choisis parmi les minéraux argileux, les substances contenant des minéraux argileux, les perlites, les silicates en feuille, l'argile, la bentonite, l'hectorite, la montmorillonite, la vermiculite, les zéolites, la sepiolite, l'attapulgite, l'argile cuite, l'argile expansée, le schiste expansé, les cendres volcaniques, la pierre ponce, le gel de silice et les smectites, et les matières d'origine organique sont choisis parmi le compost, le fumier de ferme pourri, les produits apparentés au charbon, les matières ligno-cellulosiques, les fibres de bois, la laine de bois, les fibres de noix de coco, les fibres de chanvre et les fibres de lin.

11. Hybride de stockage d'eau pour humus stable susceptible d'être obtenu par le procédé selon la revendication 10.
